# EUROPÄISCHE PATENTANMELDUNG

(11) **EP 0 656 553 A1**
(43) Veröffentlichungstag der Anmeldung: **07.06.1995**
(21) Anmeldenummer: 94111528.9
(22) Anmeldetag: 23.07.1994
(51) Int. Cl.: G02B 21/26

(54) **X-Y-Antrieb für Mikroskop-Objektführer**

(30) Priorität: 03.12.1993 DE 9318495 U; 23.02.1994 DE 9402950 U
(71) Anmelder: ESCHENBACH OPTIK GmbH + Co., D-90409 Nürnberg (DE)
(72) Erfinder: Henkelmann, Klaus, D-90552 Röthenbach (DE); Matzdorf, Manfred, D-91475 Lonnerstadt (DE)
(74) Vertreter: Tergau, Enno, Dipl.-Ing.

(57) **Zusammenfassung**

Mikroskop mit einem Objekttisch, der eine x-y-Ebene definiert und mit einem Objektführer versehen ist, der in der x-y-Ebene mittels x-y-Verstelleinrichtungen verstellbar ist. Diese Einrichtung weist Verstellantriebe mit um jeweilige Antriebsachsen (5,5') drehbaren Wellen (9,21) zur Verstellung des Objektführers längs der x- bzw. der y-Richtung auf. Die Antriebsachsen (5,5') verlaufen parallel zur x-y-Ebene, im Ausführungsbeispiel sind beide Achsen identisch.

## Beschreibung

Die Erfindung betrifft ein Mikroskop nach dem Oberbegriff des Anspruchs 1.

Mikroskope mit Objekttischen mit einem Objektführer sind allgemein bekannt. Der Objektführer ist eine Verstelleinrichtung, die eine Objektverstellung auf der Oberfläche des Objekttisches sowohl in x- als auch in y-Richtung, also in Richtung beider horizontaler Erstreckungskoordinaten der Objekttischoberfläche ermöglicht.

Bei einem bekannten Mikroskop ist der Objekttisch als Kreuztisch ausgeführt. Er enthält zwei in der Tischebene in x- und in y-Richtung verschiebbare Schlitten mit auf ihrer Unterseite in Schlittenlängsrichtung verlaufenden Zahnstangen, die jeweils an einer seitlichen Flanke mit der Verzahnung versehen sind. Die Verzahnungsebene verläuft somit bei beiden Zahnstangen vertikal oder rechtwinklig zur Tischoberfläche. Der Zahnstangenantrieb enfolgt über jeweils eine Spindel mit vertikalem Achsverlauf. Die Spindeln für beide Zahnstangentriebe sind koaxial ineinander gelagert und tragen an ihrem freien Ende jeweils ein Triebrad. Beide Triebräder sind in Axialrichtung nebeneinander angeordnet. Zur besseren Unterscheidbarkeit weist das dem Objekttisch nähere Triebrad einen größeren Durchmesser auf als das dem Objekttisch fernere Triebrad.

Dieser Kreuztisch mit zwei schlittenartigen Zahnstangen-Verstellantrieben ist baulich sehr aufwendig und entsprechend teuer. Ein weiterer Nachteil besteht in der vertikalen Ausrichtung der Verstellspindeln für die Betätigung der beiden Zahntriebe. Die vertikale Ausrichtung verläuft nämlich rechtwinklig zu der weiteren, bei jedem höherwertigen Mikroskop im Bereich der Ständersäule vorhandenen, mit horizontalem Achsverlauf versehenen Höhenverstellspindel für den Objekttisch oder Objektiveinrichtungen. Für die Bedienungsperson ist es nachteilig, daß wegen der unterschiedlichen Achsrichtungen der Höhen- oder z-Verstellung einerseits und der x-y-Verstelleinrichtungen des Objekttisches andererseits unterschiedliche Bedienungslogiken vorliegen. Schließlich ist zu berücksichtigen, daß die besagten insgesamt drei Verstellantriebe von der Bedienungsperson in der Regel dann betätigt werden, wenn ihr Blick auf das Mikroskopierobjekt konzentriert ist und wenn sie die Lage und die logischen Drehrichtungen der jeweiligen Verstellräder optisch nicht erkennen kann.

Weiterhin sind nachträglich an Objekttisch anklemm- oder -schraubbare Objektführer mit jeweils einer x-y-Verstelleinrichtung bekannt, deren Verstellachsen in gleicher Weise vertikal ausgerichtet sind, jedoch in Montagestellung nicht unterhalb sondern oberhalb der Ebene des Objekttisches liegen. Sie wirken auf an den Flanken von Verstellschlitten angeordnete Zahnstangen. Neben den bereits geschilderten Nachteilen des bekannten Kreuztisches kommt hier der weitere Nachteil der großen Bauhöhe oberhalb der Ebene des Objekttisches hinzu, durch die die freie Zugänglichkeit des Mikroskopierobjektes von allen Seiten her beeinträchtigt wird. Außerdem ist die Bedienung der nunmehr mit Abstand oberhalb der Ebene des Objekttisches befindlichen Stellräder noch weniger komfortabel.

Der Erfindung liegt die Aufgabe zugrunde, ein Mikroskop mit einem in der x-y-Ebene verstellbaren Objektführer zu schaffen, der einfach zu bedienen ist. Ferner soll sich ein derartiges Mikroskop durch eine einfache, kostengünstig realisierbare Konstruktion auszeichnen.

Diese Aufgabe ist erfindungsgemäß bei einem Mikroskop nach Anspruch 1 gelöst.

Das Mikroskop nach der Erfindung enthält einen Objekttisch, der eine x-y-Ebene definiert und mit einem Objektführer versehen ist, der in der x-y-Ebene mittels x-y-Verstelleinrichtungen verstellbar ist, die Verstellantriebe mit um jeweilige Verstellantriebsachsen drehbaren Verstellantriebswellen zur Verstellung des Objektführers längs der x- bzw. der y-Richtung aufweisen. Zur Lösung der Aufgabe ist weiter vorgesehen, daß die Verstellantriebsachsen zumindest im wesentlichen parallel zur x-y-Ebene verlaufen.

Dadurch ist es für eine Bedienperson leicht, die erforderlichen Bewegungen des Mikroskopierobjektes zu veranlassen, ohne daß kompliziertes Umdenken erforderlich ist, wie sich eine Drehbewegung um eine vertikale Achse in eine Horizontalbewegung umsetzt. Weiterhin muß ein Mikroskopbediener nicht umgreifen, wenn er zwischen Höhenverstelleinrichtungen für den Objekttisch oder Objektiveinrichtungen einerseits und x-y-Verstelleinrichtungen andrerseits wechselt. Das bei Mikroskopen nach dem Stand der Technik erforderliche Drehen der Hand zur Bedienung um 90° kann entfallen. Die Hand kann in einer entspannten Haltung neben dem Mikroskop liegen und dabei ist die Betätigung der Verstelleinrichtungen möglich. Dies wird ferner durch die in Folge der horizontalen Bauart niedrig haltbare Bauart unterstützt. Dadurch ist in vorteilhafter Weise für die Verstell- und Einstelltätigkeiten am Mikroskop keine so große Konzentration erforderlich und der Mikroskopbediener kann seine Aufmerksamkeit voll und ganz seiner eigentlichen Arbeit des Mikroskopierens widmen.

Diese Vereinfachung der Tätigkeit von Bedienungspersonen des Mikroskops nach der Erfindung wurde erreicht, ohne daß zusätzliche Anbauten und Vorrichtungen verwendet wurden, so daß eine einfache und kostengünstig realisierbare Konstruktion erhalten blieb. Insbesondere ist eine niedrigere Bauart der Verstelleinrichtungen und somit des Objektführers und Objekttisches möglich.

Ein weiterer Vorteil wird dadurch erreicht, daß nach Anspruch 2 die Verstellantriebsachsen zumindest im wesentlichen parallel sind. Die erforderlichen Bewegungen der Bedienungsperson werden dabei weiter reduziert. Dieser Effekt wird gemäß der bevorzugten Ausführung von Anspruch 3 weiter dadurch verstärkt, daß die Verstellantriebsachsen wenigstens annähernd längs der sich quer vor einem Mikroskopbediener erstreckenden x-Richtung verlaufen. Dies bedeutet, daß die Verstelleinrichtungen problemlos mit einer in Ruhestellung neben dem Mikroskop aufliegenden Hand bedient werden können.

Anspruch 5 betrifft eine vorzugsweise Weiterbildung des erfindungsgemäßen Mikroskops, wonach der Verstellantrieb zur Verstellung des Objektführers in x-Richtung einen Gewindetrieb mit einer längs der x-Richtung unbeweglichen Verstellantriebswelle und einem zusammen mit dem Objektführer längs der x-Richtung beweglichen Führungselement enthält. Dies hat den Vorteil, daß die Bedienperson die Bewegung in der x-Richtung einfach durchschauen kann. Die Verschiebung des Objektführers erfolgt nämlich analog dem Gewindegang des Gewindetriebes. D. h., daß eine Drehung der Verstellantriebswelle im Uhrzeigersinn beispielsweise zu einer Bewegung des Objektführers nach rechts führt, wenn ein sogenanntes Rechtsgewinde verwendet wird. Kompliziertes Umdenken bleibt dem Mikroskopbediener folglich erspart und er kann sich noch besser auf seine Betrachtungen des Mikroskopierobjektes konzentrieren.

Die Ausführung nach Anspruch 6 ist besonders einfach und funktioniert mit hoher Präzision. Dabei ist die Verstellantriebswelle eine durch ein zugehöriges x-Verstellrad drehbare Gewindespindel, die verstellradseitig in einem ersten Lagerblock drehbar gelagert ist. Das Führungselement ist ein Führungsrohr, das in einem zweiten Lagerblock, der vom erstem Lagerblock längs der x-Richtung beabstandet ist, längs dieser Richtung verschiebbar gelagert ist. Ferner weist die Gewindespindel ein in ein Innengewinde des Führungsrohres eingreifendes Außengewinde auf. Durch diese baulichen Maßnahmen werden in besonders geschickter Weise eine einfache Konstruktion erreicht und aufwendige Lagerungen und Umsetzungen von Bewegungen vermieden.

Bevorzugt weist das Außengewinde der Gewindespindel eine geringe Anzahl von Gewindegängen auf und ist insbesondere im vom x-Verstellrad abgewandten Endbereich der Gewindespindel vorgesehen. Dabei hat das Innengewinde des Führungsrohres eine Länge, die wenigstens einem Verstellbereich längs der x-Richtung entspricht. Durch diese bevorzugte Ausführung gemäß Anspruch 7 wird der Verstellbereich auf besonders einfache Weise erhalten.

Alternativ kann das Außengewinde der Gewindespindel eine Länge haben, die wenigstens einem Verstellbereich längs der x-Richtung entspricht. Zusätzlich kann vorzugsweise vorgesehen sein, daß das Innengewinde des Führungsrohres eine geringe Anzahl von Gewindegängen aufweist und insbesondere im dem x-Verstellrad zugewandten Endbereich des Führungsrohres vorgesehen ist, wie insgesamt im Anspruch 8 angegeben ist.

Mit der Ausführung des Anspruchs 9 wird als weiterer Vorteil ein besonders großer nutzbarer Verstellbereich erzielt. Dazu ist der Verstellbereich längs der x-Richtung zumindest im wesentlichen der Abstand der Lagerblöcke längs der x-Richtung. Der Verstellbereich ist bezogen auf den Objekttisch optimal, wenn die Lagerblöcke längs der x-Richtung einen Abstand haben, der in der Größenordnung des Ausdehnung des Objekttisches längs der x-Richtung liegt.

Anspruch 12 betrifft u. a. eine bevorzugte Ausgestaltung zur weiteren Verbesserung der Führung der Bewegung längs der x-Richtung.

Bevorzugt enthält nach Anspruch 13 der Verstellantrieb zur Verstellung des Objektführers in y-Richtung einen Zahnstangentrieb mit einer längs der y-Richtung unbeweglichen Verstellantriebswelle und einer zusammen mit dem Objektführer längs der y-Richtung beweglichen Zahnstange. Dadurch wird abermals die Bedienung vereinfacht. Eine Verstellung des Objektführers z. B. von der Bedienperson weg kann einfach durch eine Drehung der Verstellantriebswelle im Uhrzeigersinn erreicht werden, was durch eine Drehung "nach vorne" bewerkstelligt werden kann. Ein Umdenken zwischen Bewegungsrichtungen der Verstellantriebswelle einerseits und des Objektführers andrerseits ist nicht erforderlich, so daß sich der Mikroskopbediener vollständig auf seine eigentliche Beobachtungsaufgabe konzentrieren kann.

Die weitere Ausgestaltung nach Anspruch 14 in der Form, daß die Verstellantriebswelle längs der x-Richtung unbeweglich ist, hat den Vorteil, daß der Ort der Verstellantriebswelle unabhängig vom Ort des Objektführers in x-Richtung ist, was die Bedienung des y-Verstellantriebs besonders einfach gestaltet.

Anspruch 15 betrifft eine bevorzugte Ausgestaltung, wonach die Verstellantriebswelle ein durch ein zugehöriges y-Verstellrad drehbares Hüllrohr ist, mit der zum Antrieb der Zahnstange ein Zahnrad koaxial und drehfest verbunden ist, was zu einem vorteilhaften einfachen Aufbau führt, der eine präzise Bedienung und Einstellung ermöglicht. Weiter sind gemäß dieser Ausführungsform die Zahnstange und das Zahnrad unabhängig von der Stellung des Objektführers längs der x-Richtung in dieser Richtung betrachtet zumindest bereichsweise in Eingriff. Der Objektführer kann somit über den gesamten x-Einstellbereich problemlos längs der y-Richtung verstellt werden. Dies ist besonders einfach und wirkungsvoll gemäß den Merkmalen von Anspruch 16 realisierbar, indem die Zahnstange zusammen mit dem Objektführer längs der x-Richtung beweglich ist, und indem vorzugsweise das Zahnrad zusammen mit der Zahnstange und dem Objektführer längs der x-Richtung beweglich ist.

Die vorzugsweise Ausgestaltung nach Anspruch 17 hat eine gute und sichere Anordnung des Zahnrades zur Folge.

Bevorzugt ist gemäß Anspruch 18 die Verstellantriebswelle bzw. das Hüllrohr verstellradseitig in einem Lagerblock drehbar gelagert, der insbesondere längs der x-Richtung unbeweglich ist und/oder vorzugsweise identisch mit dem Lagerblock zur verstellradseitigen Lagerung der Verstellantriebswelle bzw. Gewindespindel ist. Dies vereinfacht weiter die Bauform und führt überdies zu einer produktionstechnisch unaufwendigen Konstruktion.

Ein besonders einfacher Aufbau und eine äußerst einfache Bedienung wird dadurch erreicht, daß gemäß Anspruch 19 die Verstellantriebsachsen zur Verstellung in x- und in y-Richtung identisch sind. Die Bedienungsperson muß somit zum Erreichen der Verstellantriebswellen oder deren Verstellräder nicht an verschiedene Stellen neben dem Mikroskop langen, sondern kann ggf. mit einer Handposition alle Verstelloperationen vornehmen.

Diese Ausführungsform ist besonders einfach zu realisieren, wenn nach der bevorzugten Ausgestaltung des Anspruchs 20 die Gewindespindel koaxial in dem Hüllrohr drehgelagert ist, das vorzugsweise in dem Lagerblock drehbar und axial unbeweglich gelagert ist. Zusätzlich zu dem vorgenannten Vorteil wird bei dieser Bauform eine weitere Vereinfachung der Verstelleinrichtungen erreicht. Nach Anspruch 21 kann vorzugsweise weiterhin die Gewindespindel durch das y-Verstellrad koaxial hindurchgeführt sein und an ihrem dem Führungsrohr abgewandten Endbereich das x-Verstellrad aufweisen, was zu einer noch weiteren Vereinfachung des Aufbaues führt.

Für die Bedienung ist es ferner von Vorteil, wenn die beiden Verstellräder unterschiedliche Durchmesser haben, und wenn insbesondere das y-Verstellrad einen größeren Durchmesser als das x-Verstellrad hat, wie im Anspruch 22 angegeben ist. Dies erleichtert zusätzlich die Bedienung des erfindungsgemäßen Mikroskops.

Um auf unaufwendige Weise sicherzustellen, daß die x- und die y-Verstellungen unabhängig voneinander erfolgen können ist nach Anspruch 23 bevorzugt vorgesehen, daß das Hüllrohr wenigstens eine längs der x-Richtung verlaufende Führungsnut aufweist, in die ein mit dem Zahnrad drehfestes Mitnehmerteil eingreift, durch das das Zahnrad zur Drehung zusammen mit dem Hüllrohr mit diesem gekoppelt und zusammen mit dem Objektführer und der Zahnstange durch den Verstellantrieb längs der x-Richtung beweglich ist. Dadurch können die Verstelleinrichtungen präzise und leichtgängig gebaut werden, wobei die Weiterbildung nach Anspruch 25 die Robustheit und Zuverlässigkeit der Verstellantriebe erhöht, indem das Hüllrohr zwei diametral gegenüberliegenden Führungsnuten aufweist und zwei entsprechend zum Eingriff in diese angeordnete Mitnehmerteile bzw. Mitnehmernasen vorgesehen sind.

Weitere konstruktiv bevorzugte Ausgestaltungsmerkmale nach Anspruch 26 betreffen das Führungsrohr, das über das Hüllrohr längs der x-Richtung verschiebbar ist, und das Außengewinde, das an der Gewindespindel im vom x-Verstellrad abgewandten Endbereich vorgesehen ist, der aus dem Hüllrohr herausragt, wobei der Außendurchmesser des Außengewindes größer als der Außendurchmesser des Hüllrohres ist und das Innengewinde im Führungsrohr eine Länge aufweist, die zumindest gleich dem oder größer als der Verstellbereich des Objektführers längs der x-Richtung ist. Dies unterstützt in vorteilhafter Weise den einfachen Aufbau und die optimale Nutzbarkeit des erfindungsgemäßen Mikroskops.

Anspruch 27 betrifft bevorzugte Bauformen, die zur weiteren Vereinfachung des Aufbaus und der Bedienbarkeit dienen. Ferner betrifft Anspruch 29 die Möglichkeit, das Mikroskop quasi von einem Betrieb für Rechtshänder auf einen Betrieb für Linkshänder umzurüsten. Dies ist bei dem erfindungsgemäßen Mikroskop besonders einfach möglich, da lediglich die Verstellantriebe um 180° gedreht eingebaut werden müssen. Hierfür könnte sogar vorgesehen werden, daß die Verstellantriebe mit ihren Verstellrädern in einer Baueinheit zusammengefaßt sind, die dann kunden- oder bedienerseitig bedarfsgemäß in das Mikroskop einsetzbar und jederzeit umbaubar ist. Dadurch kann das erfindungsgemäße Mikroskop problemlos an den jeweiligen Bediener angepaßt werden.

Wenn der Objektführer gemäß Anspruch 28 vorzugsweise zusammen mit den Verstelleinrichtungen lösbar mit dem Objekttisch verbunden ist, ist der vorbeschriebene Umbau oder ein planmäßiger Einsatz der Verstelleinrichtungen bzw. des Objektführers einfach realisierbar. Dazu ist bevorzugt nach Anspruch 29 vorgesehen, daß der Objekttisch eine Ausnehmung aufweist, in die die Verstelleinrichtungen einsetzbar sind, so daß der Objektführer in der x-y-Ebene insbesondere auf dem Objekttisch zumindest im wesentlichen aufliegend bewegbar ist. Insbesondere ist entsprechend Anspruch 30 die Ausnehmung benachbart einer einem Mikroskopbediener zugewandten Ständersäule angeordnet. Ferner enthält sie im Anspruch 31 angegebene Ausführungsform ein an Stelle der Verstelleinrichtungen in die Ausnehmung im Objekttisch einsetzbares Distanzstück, dessen Oberfläche vorzugsweise zumindest im wesentlichen in der Oberflächenebene des Objekttisches liegt.

Höhenverstelleinrichtungen für Objektiveinrichtungen und/oder den Objekttisch, wie im Anspruch 33 beschrieben, verbessern die Einsatzmöglichkeiten und Bedienbarkeit des erfindungsgemäßen Mikroskops. Vorteilhafte Bauformen der Höhenverstelleinrichtungen sind in den Ansprüchen 34 und 35 angegeben, wodurch die Bedienung des erfindungsgemäßen Mikroskops besonders einfach ist, indem die Höhenverstelleinrichtungen Verstellantriebsachsen aufweisen, von denen wenigstens eine zumindest im wesentlichen parallel zur x-y-Ebene verläuft und vorzugsweise zu wenigstens einer Verstellantriebsachse der x-y-Verstelleinrichtungen mindestens annähernd parallel ist und insbesondere zumindest eine der Verstellantriebsachsen der Höhenverstelleinrichtungen längs der x-Richtung verläuft. Dadurch wird vermieden, daß ein Mikroskopbediener bei Verstelloperationen in x-, y- und z-Richtung immer wieder umdenken und seine Handhaltung ändern muß.

Einige weitere Ausgestaltungen und Vorteile, die sich aus Merkmalskombinationen ergeben, werden nachstehend angegeben.

Gemäß den entsprechenden Anspruchskombinationen besteht die Erfindung vorzugsweise in einem Mikroskop mit einem Verstellantrieb, der eine Kombination zwischen einem Schraubgewinde-Trieb und dem an sich bekannten Zahntrieb enthält. Konstruktiv ist die Lösung gemäß bevorzugten Ausführungsformen so getroffen, daß die Seitenverstellung in x-Richtung durch den Schrauben- oder Gewindetrieb und die Tiefenverstellung in y-Richtung durch den Zahntrieb bewerkstelligt wird. Die Antriebswellen für die Betätigung beider Triebe verlaufen insbesondere koaxial zueinander. Beide Triebe sind dabei dann bevorzugt ineinander integriert.

Daß der x-Verstellantrieb durch das Schraubengewinde bewerkstelligt wird, bringt den erheblichen Vorteil, daß die Verstellachse für beide Verstellräder auf besonders einfache Weise horizontal und ggf. parallel zur Achse der herkömmlichen Höhenverstelleinrichtung für den Objekttisch oder Objektiveinrichtungen verläuft. Dadurch sind die Verstell-Logiken für alle Verstellräder dieser drei wesentlichen Verstelleinrichtungen an dem Mikroskop gleich und gestatten die Bedienung ohne kompliziertes Umdenken.

Ein weiterer wesentlicher Vorteil des Erfindungsgegenstandes besteht darin, daß der Doppel-Verstellantrieb mit horizontaler, evtl. parallel zur Höhenverstellspindel verlaufender Achse niedrig baut. Dadurch ist es möglich, den Verstellantrieb zumindest im wesentlichen innerhalb der Dicke des Objekttisches unterzubringen. Er steht somit jedenfalls nicht wesentlich über die Tischoberfläche hinaus. Auch die Einbautiefe dieses Antriebes ist gering. Der Rohraußenumfang des Führungsrohrs kann in einfacher Weise als Führungsoberfläche mit hoher Führungsgenauigkeit verwendet werden.

Ein besonderer Vorteil ist dann gewährleistet, wenn der Objekt- oder Mikroskoptisch von Hause aus so gebaut ist, daß er zwischen seiner ständerseitigen Begrenzungskante und der Ständersäule einen ausreichenden Zwischenraum zum Einbau des Objektführers frei läßt. Der Objekttisch kann dann konstruktiv zweiteilig ausgebildet sein und praktisch aus dem eigentlichen Objekttisch und einem ihn in Richtung auf den Ständer hin vergrößernden Distanzteil bestehen, welches im Falle der Verwendung des Objekttisches ohne Objektführer eine Vergrößerung der Tischoberfläche bewirkt, während bei gewünschtem Objektführer dieses Distanzstück nur entnommen und durch den Objektführer ersetzt zu werden braucht.

Neben der als bevorzugt dargestellten Bauform mit koaxialen Verstellantriebswellen ist es grundsätzlich unter Beibehaltung gewisser Vorteile auch möglich, die beiden Antriebe nebeneinander oder unter einem Winkel zueinander auszuführen. Auch können die beiden Antriebe konstruktiv gleich ausgeführt sein. Ferner ist es möglich, daß eine Verstelleinrichtung insgesamt zusammen mit dem Objektführer mittels der anderen Verstelleinrichtung bewegt wird. Außerdem sind die x- und y-Achsen bzw. -Richtungen bei den einzelnen Ausführungen austauschbar. Wesentlich ist dabei jedoch immer die grundsätzlich horizontale, d. h. parallel zur x-y-Ebene ausgerichtete Auslegung der Verstellantriebsachsen.

Weitere vorteilhafte Ausgestaltungen der Erfindung ergeben sich aus den übrigen Unteransprüchen sowie den verschiedenen Anspruchskombinationen. Der Gegenstand der Erfindung wird anhand eines in den Figuren dargestellten Ausführungsbeispieles näher erläutert. Es zeigen:
Fig. 1 eine perspektivische Darstellung des Mikroskopes mit insbesondere im wesentlichen der gesamten Oberfläche des Objekttisches,
Fig. 2 einen Vertikalschnitt durch die x-y-Verstelleinheit, also durch den Verstellantrieb des Objektführers mit in der Schnittebene liegenden Verstellantriebsachsen, und
Fig. 3 einen Querschnitt entsprechend der Schnittlinie III-III in Fig. 2.

Gleiche Bezugszeichen in den einzelnen Figuren bezeichnen gleiche Teile.

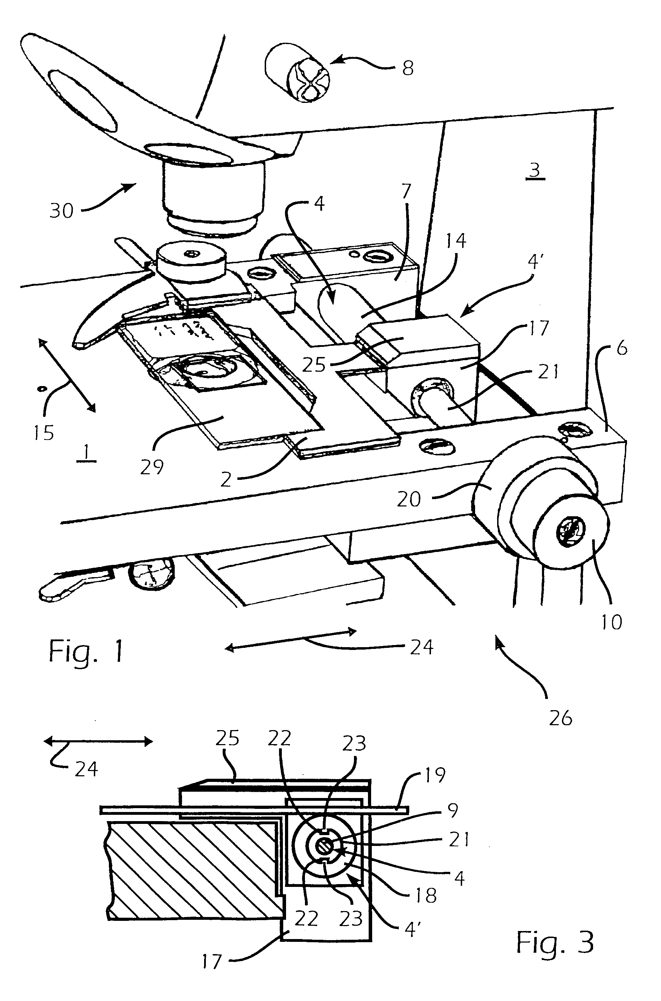

Etwa in der Ebene des Objekttisches 1, dessen Oberfläche eine x-y-Ebene definiert, befindet sich der Objektführer 2, und zwar im Bereich zwischen dem eigentlichen Objekttisch 1 und der Ständersäule 3 des Mikroskops 26, wie Fig. 1 zeigt. In dem Objektführer 2 ist ein Objektträgerglas 29 durch nicht näher bezeichnete Klemmeinrichtungen eingespannt und zusammen mit ersterem in der x-y-Ebene auf der Oberfläche des Objekt- oder Mikroskoptisches 1 verschiebbar. Die Verstellantriebe 4, 4' für den Objektführer 3 sind in einem Gehäuse (nicht dargestellt) gelagert, welches lösbar mit dem Objekttisch 1 verbunden ist und an seinen in Richtung der Verstellantriebsachsen 5, 5' beiden äußeren Enden Lagerblöcke 6, 7 für die Verstelleinrichtungen aufweist. Die in längeren Strichen dargestellte Verstellantriebsachse 5 gehört zum x-Verstellantrieb 4 und die in kürzeren Strichen dargestellte Verstellantriebsachse 5' gehört zum y-Verstellantrieb 4'.

Die Längs- oder Verstellantriebsachsen 5, 5' der Verstellantriebe 4, 4' gelten für die x- bzw. für die y-Verstellung und sind bei der gezeigten Ausführungsform identisch. Die Längsachsen 5, 5' der Verstellantriebe 4, 4' verlaufen parallel zur Längsachse der ständerseitigen Höhenverstelleinrichtung für den Objekttisch (nicht dargestellt). Eine in Fig. 1 durch ein Verstellrad angedeutete Höhenverstelleinrichtung 8 für die Objektiveinrichtungen 30 kann zusätzlich oder alternativ vorgesehen sein.

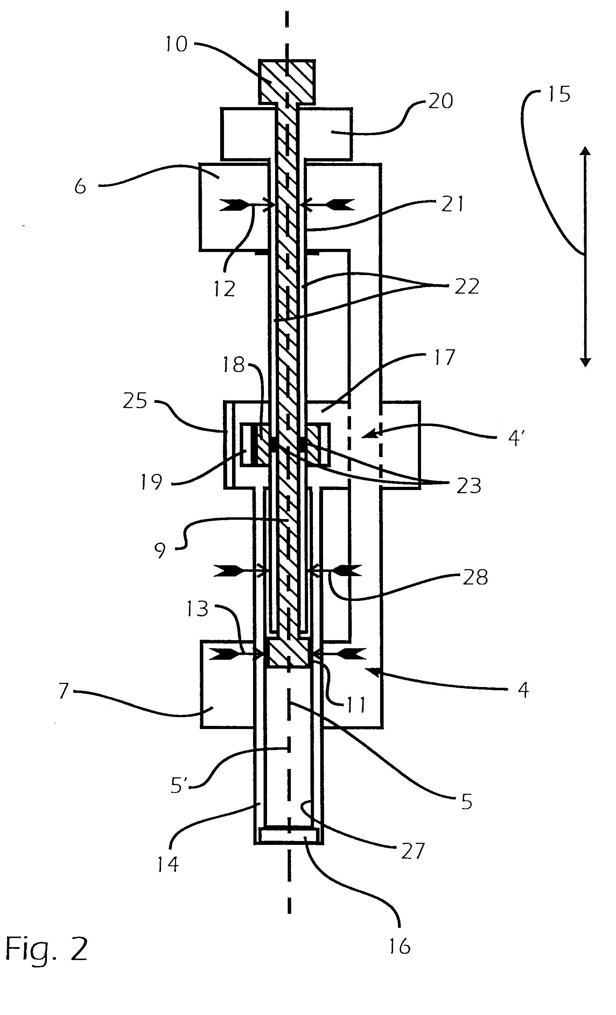

Die Seitenverstelleinrichtung in x-Richtung wird durch einen zentralen Gewinde- oder Schraubentrieb als Verstellantrieb 4 bewirkt, der in der Schnittansicht der Fig. 2 zu sehen ist. Das Antriebselement ist die zentrale Gewinde- oder Schraubspindel 9 als Verstellantriebswelle, die durch das außenliegende Verstellrad 10 manuell drehbar ist. An ihrem dem Verstellrad 10 gegenüberliegenden, inneren Ende trägt die Schraubspindel 9 ein Außengewinde 11 mit gegenüber dem Spindeldurchmesser 12 vergrößertem Außendurchmesser 13. Das mit der Verstellantriebsachse 5 achsgleiche Außengewinde 11 der Gewinde- oder Verstellspindel 9 greift in ein analoges Innengewinde 27 eines Führungsrohres 14 als Führungselement, welches seinerseits in Längsrichtung innerhalb des Lagerblockes 7 in x-Richtung 15 verschiebbar gelagert ist. Die Verschieberichtungen längs der x-Richtung sind durch den Doppelpfeil 15 gekennzeichnet, welcher parallel zur Verstellantriebsachse 5 verläuft.

Das Führungsrohr 14 ist an seinem äußeren Ende durch eine Verschlußkappe 16 verschlossen, wodurch der x-Verstellantrieb 4 nach außen abgekapselt ist. Mit seinem inneren, zwischen den beiden Lager- oder Führungsblöcken 6, 7 liegenden Ende reicht das Führungsrohr 14 so weit in Richtung auf das Verstellrad 10, daß der Verstellbereich dieses x-Verstellantriebes 4 praktisch über den gesamten Abstand zwischen den beiden Lagerblöcken 6, 7 verläuft.

An seinem inneren, zwischen den beiden Lagerblöcken 6, 7 liegenden Ende ist das Führungsrohr 14 fest mit einem Getriebekasten 17 verbunden, dessen Außenwand so gestaltet sein kann, daß sie eine schlittenartige Gleit- und/oder Nutführung gegenüber dem Trägergehäuse für die beiden Lagerblöcke 6, 7 bildet. Der Getriebekasten 17 dient der Aufnahme eines zur Längs- und Verstellantriebsachse 5 bzw. 5' koaxial gelagerten Zahnrades 18 als Antriebsritzel für den die y-Tiefenverstellung bewirkenden Zahnstangentrieb als Verstellantrieb 4'. Die Zahnstange verläuft horizontal parallel zur Oberfläche des Objekttisches 1 und ist in den Fig. 2 und 3 mit der Bezugsziffer 19 versehen. Ihre Verzahnungsebene ist horizontal ausgerichtet. Die Verzahnung kämmt mit dem y-Verstellritzel oder Zahnrad 18.

Der Antrieb des y-Verstellritzels 18 erfolgt über das Verstellrad 20, welches neben dem Verstellrad 10 für die x-Verstellung positioniert ist und dessen Lagerung koaxial zur Verstellantriebsachse 5, 5' verläuft, wie in den Fig. 1 und 2 dargestellt ist. Das y-Verstellrad 20 ist gemäß Fig. 2 mit dem außerhalb des Lagerblockes 6 liegenden Ende eines eine weitere Verstellantriebswelle darstellenden Hüllrohres 21 verbunden, welches auf dem Außenumfang der x-Verstellspindel 9 drehbar gelagert ist und bis etwa zum inneren, das Außengewinde 11 tragenden Ende der Gewinde- oder Verstellspindel 9 und somit bis nahezu an den Lagerblock 7 reicht. Der Außendurchmesser 28 des Hüllrohres 21 ist dabei so groß, daß das Führungsrohr 14 frei über das Hüllrohr 21 verschiebbar ist. Oder anders ausgedrückt ist der Außendurchmesser 13 des Außengewindes 11 größer als der Außendurchmesser 28 des Hüllrohres 21.

Auf seinem Außenumfang trägt das Hüllrohr 21 mindestens eine sich im wesentlichen in Rohrlängsrichtung bzw. längs der Verstellantriebsachse 5' verlaufende Führungs- oder Bewegungsnut 22. Beim Ausführungsbeispiel sind zwei solche Bewegungsnuten einander diametral gegenüberliegend vorgesehen. Im Falle von Fig. 2 und 3 flankieren sie oben und unten den Außendurchmesser des Hüllrohres 21.

In die beiden Führungsnuten 22 ragen vom Innendurchmesser des y-Verstellritzels 18 radial nach innen gerichtete Mitnehmernasen 23 als Mitnehmerteile. Bei einer Drehung des y-Verstellrades 20 übertragen die Flanken der Längsnuten 22 das Drehmoment oder die Drehbewegung über die Mitnehmernasen 23 auf das y-Verstellritzel 18, welches seinerseits den y-Vorschub längs der durch den Doppelpfeil 24 dargestellten y-Richtung auf die Zahnstange 19 überträgt. Der Getriebekasten 17 ist durch einen Getriebedeckel 25 verschlossen, so daß ein vollkommen abgekapselter Antrieb vorliegt.

Bei der x-Verstellung mittels des x-Verstellrades 10 gleitet das y-Verstellritzel 18 mit seinen beiden Mitnehmernasen 23 in x-Richtung gemäß dem Doppelpfeil 15 auf dem Außendurchmesser 28 des Hüllrohres 22. Beide Verstellantriebe 4, 4' arbeiten somit voneinander gänzlich unabhängig. Bei einer x- oder bei einer y-Verstellung erfolgt keine Ortsveränderung in der anderen Verstellrichtung.

Die Kapselung des Führungsrohres 14 sowie der Verschluß des Getriebekastens 17 bewirken beispielsweise, daß einerseits kein Schmutz eindringen und die jeweiligen Mechaniken betriebsunfähig machen kann, und daß andrerseits Schmiermittel der Mechaniken nicht austreten kann.

Die vorstehend beschriebene und in der Zeichnung dargestellte Ausführung dient lediglich dazu, die Erfindung beispielhaft zu erläutern, die nicht darauf beschränkt ist. Außer der in dem Ausführungsbeispiel realisierten Merkmalskombination umfaßt die Erfindung jegliche durch die Ansprüche abgedeckte Ausgestaltung.

### Bezugszeichenliste

- 1: Objekttisch
- 2: Objektführer
- 3: Ständersäule
- 4, 4': Verstellantriebe
- 5, 5': Verstellantriebsachsen
- 6: Lagerblock
- 7: Lagerblock
- 8: Höhenverstelleinrichtung
- 9: Gewindespindel als Verstellantriebswelle
- 10: x-Verstellrad
- 11: Außengewinde
- 12: Spindeldurchmesser
- 13: Außendurchmesser von 11
- 14: Führungsrohr als Führungselement
- 15: Doppelpfeil in x-Richtung
- 16: Verschlußkappe
- 17: Getriebekasten
- 18: Zahnrad
- 19: Zahnstange
- 20: y-Verstellrad
- 21: Hüllrohr als Verstellantriebswelle
- 22: Führungsnut
- 23: Mitnehmernase als Mitnehmerteil
- 24: Doppelpfeil in y-Richtung
- 25: Getriebedeckel
- 26: Mikroskop
- 27: Innengewinde
- 28: Außendurchmesser von 21
- 29: Objektträgerglas
- 30: Objektiveinrichtungen

## Patentansprüche

1. Mikroskop mit einem Objekttisch, der eine x-y-Ebene definiert und mit einem Objektführer versehen ist, der in der x-y-Ebene mittels x-y-Verstelleinrichtungen verstellbar ist, die Verstellantriebe mit um jeweilige Verstellantriebsachsen drehbaren Verstellantriebswellen zur Verstellung des Objektführers längs der x- bzw. der y-Richtung aufweisen,
dadurch gekennzeichnet,
daß die Verstellantriebsachsen (5, 5') zumindest im wesentlichen parallel zur x-y-Ebene verlaufen.

2. Mikroskop nach Anspruch 1,
dadurch gekennzeichnet,
daß die Verstellantriebsachsen (5, 5') zumindest im wesentlichen parallel sind.

3. Mikroskop nach Anspruch 2,
dadurch gekennzeichnet,
daß die Verstellantriebsachsen (5, 5') wenigstens annähernd längs der sich quer vor einem Mikroskopbediener erstreckenden x-Richtung (Doppelpfeil 15) verlaufen.

4. Mikroskop nach einem der vorhergehenden Ansprüche,
dadurch gekennzeichnet,
daß die Verstelleinrichtungen ein Gehäuse umfassen, in dem ein, insbesondere beide Verstellantrieb(e) (4, 4') für den Objektführer (2) gelagert ist/sind.

5. Mikroskop nach einem der vorhergehenden Ansprüche,
dadurch gekennzeichnet,
daß der Verstellantrieb (4) zur Verstellung des Objektführers (2) in x-Richtung (Doppelpfeil 15) einen Gewindetrieb mit einer längs der x-Richtung (Doppelpfeil 15) unbeweglichen Verstellantriebswelle (9) und einem zusammen mit dem Objektführer (2) längs der x-Richtung (Doppelpfeil 15) beweglichen Führungselement (14) enthält.

6. Mikroskop nach Anspruch 5,
dadurch gekennzeichnet,
daß die Verstellantriebswelle eine durch ein zugehöriges x-Verstellrad (10) drehbare Gewindespindel (9) ist, die verstellradseitig in einem ersten Lagerblock (6) drehbar gelagert ist,
daß das Führungselement ein Führungsrohr (14) ist, das in einem zweiten Lagerblock (7), der vom erstem Lagerblock (6) längs der x-Richtung (Doppelpfeil 15) beabstandet ist, längs dieser Richtung verschiebbar gelagert ist, und daß die Gewindespindel (9) ein in ein Innengewinde (27) des Führungsrohres (14) eingreifendes Außengewinde (11) aufweist.

7. Mikroskop nach Anspruch 6,
dadurch gekennzeichnet,
daß das Außengewinde (11) der Gewindespindel (9) eine geringe Anzahl von Gewindegängen aufweist und insbesondere im vom x-Verstellrad (10) abgewandten Endbereich der Gewindespindel (9) vorgesehen ist, und
daß das Innengewinde (27) des Führungsrohres (14) eine Länge hat, die wenigstens einem Verstellbereich längs der x-Richtung (Doppelpfeil 15) entspricht.

8. Mikroskop nach Anspruch 6,
dadurch gekennzeichnet,
daß das Außengewinde (11) der Gewindespindel (9) eine Länge hat, die wenigstens einem Verstellbereich längs der x-Richtung (Doppelpfeil 15) entspricht, und
daß vorzugsweise das Innengewinde (27) des Führungsrohres (14) eine geringe Anzahl von Gewindegängen aufweist und insbesondere im dem x-Verstellrad (10) zugewandten Endbereich des Führungsrohres (14) vorgesehen ist.

9. Mikroskop nach Anspruch 7 oder 8,
dadurch gekennzeichnet,
daß der Verstellbereich längs der x-Richtung (Doppelpfeil 15) zumindest im wesentlichen der Abstand der Lagerblöcke (6, 7) längs der x-Richtung (Doppelpfeil 15) ist, und
daß die Lagerblöcke (6, 7) vorzugsweise längs der x-Richtung (Doppelpfeil 15) einen Abstand haben, der in der Größenordnung des Ausdehnung des Objekttisches (1) längs der x-Richtung (Doppelpfeil 15) liegt.

10. Mikroskop nach einem der Ansprüche 6 bis 9,
dadurch gekennzeichnet,
daß das der Gewindespindel (9) abgewandte Ende des Führungsrohrs (14) durch eine Verschlußkappe (16) verschlossen ist.

11. Mikroskop nach einem der Ansprüche 6 bis 10,
dadurch gekennzeichnet,
daß das der Gewindespindel (9) zugewandte Ende des Führungsrohrs (14) fest mit einem Getriebekasten (17) verbunden ist, in dem zumindest teilweise der Verstellantrieb (4') zur Verstellung des Objektführers (2) längs der y-Richtung untergebracht ist.

12. Mikroskop nach den Ansprüchen 4 und 11,
dadurch gekennzeichnet,
daß eine Außenwand des Getriebekastens (17) derart ausgestaltet ist, daß sie eine schlittenartige Gleit- und/oder Nutführung gegenüber dem Gehäuse der Verstelleinrichtungen aufweist, und/oder
daß insbesondere der Getriebekasten (17) durch einen Getriebedeckel (25) verschlossen ist.

13. Mikroskop nach einem der vorhergehenden Ansprüche,
dadurch gekennzeichnet,
daß der Verstellantrieb (4') zur Verstellung des Objektführers (2) in y-Richtung (Doppelpfeil 24) einen Zahnstangentrieb mit einer längs der y-Richtung (Doppelpfeil 24) unbeweglichen Verstellantriebswelle (21) und einer zusammen mit dem Objektführer (2) längs der y-Richtung (Doppelpfeil 24) beweglichen Zahnstange (19) enthält.

14. Mikroskop nach Anspruch 13,
dadurch gekennzeichnet,
daß die Verstellantriebswelle (21) längs der x-Richtung (Doppelpfeil 15) unbeweglich ist.

15. Mikroskop nach Anspruch 13 oder 14,
dadurch gekennzeichnet,
daß die Verstellantriebswelle ein durch ein zugehöriges y-Verstellrad (20) drehbares Hüllrohr (21) ist, mit der zum Antrieb der Zahnstange (19) ein Zahnrad (18) koaxial und drehfest verbunden ist, und
daß die Zahnstange (19) und das Zahnrad (18) unabhängig von der Stellung des Objektführers (2) längs der x-Richtung (Doppelpfeil 15) in dieser Richtung betrachtet zumindest bereichsweise in Eingriff sind.

16. Mikroskop nach Anspruch 15,
dadurch gekennzeichnet,
daß die Zahnstange (19) zusammen mit dem Objektführer (2) längs der x-Richtung (Doppelpfeil 15) beweglich ist, und
daß vorzugsweise das Zahnrad (18) zusammen mit der Zahnstange (19) und dem Objektführer (2) längs der x-Richtung (Doppelpfeil 15) beweglich ist.

17. Mikroskop nach Anspruch 16 und einem der Ansprüche 11 oder 12,
dadurch gekennzeichnet,
daß das Zahnrad (18) in dem Getriebekasten (17) untergebracht ist.

18. Mikroskop nach einem der Ansprüche 13 bis 17,
dadurch gekennzeichnet,
daß die Verstellantriebswelle bzw. das Hüllrohr (21) verstellradseitig in einem Lagerblock (6) drehbar gelagert ist, der insbesondere längs der x-Richtung (Doppelpfeil 15) unbeweglich ist und/oder vorzugsweise identisch mit dem Lagerblock (6) zur verstellradseitigen Lagerung der Verstellantriebswelle bzw. Gewindespindel (9) ist.

19. Mikroskop nach einem der vorhergehenden Ansprüche,
dadurch gekennzeichnet,
daß die Verstellantriebsachsen (5, 5') zur Verstellung in x- (Doppelpfeil 15) und in y-Richtung (Doppelpfeil 24) identisch sind.

20. Mikroskop nach Anspruch 19 und einem der Ansprüche 6 bis 12 und einem der Ansprüche 15 bis 18,
dadurch gekennzeichnet,
daß die Gewindespindel (9) koaxial in dem Hüllrohr (21) drehgelagert ist, das vorzugsweise in dem Lagerblock (6) drehbar und axial unbeweglich gelagert ist.

21. Mikroskop nach Anspruch 20,
dadurch gekennzeichnet,
daß die Gewindespindel (9) durch das y-Verstellrad (20) koaxial hindurchgeführt ist und an ihrem dem Führungsrohr (14) abgewandten Endbereich das x-Verstellrad (10) aufweist.

22. Mikroskop nach Anspruch 20 oder 21,
dadurch gekennzeichnet,
daß die beiden Verstellräder (10, 20) unterschiedliche Durchmesser haben, und daß insbesondere das y-Verstellrad (20) einen größeren Durchmesser als das x-Verstellrad (10) hat.

23. Mikroskop nach einem der Ansprüche 20 bis 22,
dadurch gekennzeichnet,
daß das Hüllrohr (21) wenigstens eine längs der x-Richtung (Doppelpfeil 15) verlaufende Führungsnut (22) aufweist, in die ein mit dem Zahnrad (18) drehfestes Mitnehmerteil (23) eingreift, durch das das Zahnrad (18) zur Drehung zusammen mit dem Hüllrohr (21) mit diesem gekoppelt und zusammen mit dem Objektführer (2) und der Zahnstange (19) durch den Verstellantrieb (4) längs der x-Richtung (Doppelpfeil 15) beweglich ist.

24. Mikroskop nach Anspruch 23,
dadurch gekennzeichnet,
daß jedes Mitnehmerteil eine vom Innendurchmesser des Zahnrades (18) radial nach innen gerichtete Mitnehmernase (23) ist.

25. Mikroskop nach Anspruch 23 oder 24,
dadurch gekennzeichnet,
daß das Hüllrohr (21) zwei diametral gegenüberliegenden Führungsnuten (22) aufweist und zwei entsprechend zum Eingriff in diese angeordnete Mitnehmerteile bzw. Mitnehmernasen (23) vorgesehen sind.

26. Mikroskop nach einem der Ansprüche 20 bis 25,
dadurch gekennzeichnet,
daß das Führungsrohr (14) über das Hüllrohr (21) längs der x-Richtung (Doppelpfeil 15) verschiebbar ist,
daß das Außengewinde (11) an der Gewindespindel (9) im vom x-Verstellrad (10) abgewandten Endbereich vorgesehen ist, der aus dem Hüllrohr (21) herausragt,
daß der Außendurchmesser (13) des Außengewindes (11) größer als der Außendurchmesser (28) des Hüllrohres (21) ist, und
daß das Innengewinde (27) im Führungsrohr (14) eine Länge aufweist, die zumindest gleich dem oder größer als der Verstellbereich des Objektführers (2) längs der x-Richtung (Doppelpfeil 15) ist.

27. Mikroskop nach einem der Ansprüche 20 bis 26 und nach Anspruch 9,
dadurch gekennzeichnet,
daß das Zahnrad zwischen den beiden Lagerblöcken (6, 7) insbesondere längs der x-Richtung (Doppelpfeil 15) verschiebbar angeordnet ist, und/oder
daß vorzugsweise die beiden Verstellräder (10, 20) außerhalb der beiden Lagerblöcke (6, 7) auf der dem Führungsrohr (14) abgewandten Seite und insbesondere von der Ständersäule (3) des Mikroskops (26) aus betrachtet rechts vorgesehen sind, wobei bevorzugt die Verstelleinrichtungen so ummontierbar sind, daß die beiden Verstellräder (10, 20) von der Ständersäule (3) des Mikroskops (26) aus betrachtet links angeordnet sind.

28. Mikroskop nach einem der vorhergehenden Ansprüche,
dadurch gekennzeichnet,
daß der Objektführer (2) vorzugsweise zusammen mit den Verstelleinrichtungen lösbar mit dem Objekttisch (1) verbunden ist.

29. Mikroskop nach Anspruch 28,
dadurch gekennzeichnet,
daß der Objekttisch (1) eine Ausnehmung aufweist, in die die Verstelleinrichtungen einsetzbar sind, so daß der Objektführer (2) in der x-y-Ebene insbesondere auf dem Objekttisch (1) zumindest im wesentlichen aufliegend bewegbar ist.

30. Mikroskop nach Anspruch 29,
dadurch gekennzeichnet,
daß die Ausnehmung benachbart einer einem Mikroskopbediener zugewandten Ständersäule (3) angeordnet ist.

31. Mikroskop nach Anspruch 29 oder 30,
dadurch gekennzeichnet,
daß ein an Stelle der Verstelleinrichtungen in die Ausnehmung im Objekttisch (1) einsetzbares Distanzstück vorgesehen ist, dessen Oberfläche vorzugsweise zumindest im wesentlichen in der Oberflächenebene des Objekttisches (1) liegt.

32. Mikroskop nach einem der vorhergehenden Ansprüche,
dadurch gekennzeichnet,
daß der Objektführer (2) mit seiner Unterseite zumindest teilweise auf der Oberseite des Objekttisches (1) verschiebbar aufliegt.

33. Mikroskop nach einem der vorhergehenden Ansprüche,
dadurch gekennzeichnet,
daß das Mikroskop (26) Höhenverstelleinrichtungen (8) für Objektiveinrichtungen (30) und/oder den Objekttisch (1) aufweist.

34. Mikroskop nach Anspruch 33,
dadurch gekennzeichnet,
daß die Höhenverstelleinrichtungen (8) Verstellantriebsachsen aufweisen, von denen wenigstens eine zumindest im wesentlichen parallel zur x-y-Ebene verläuft und vorzugsweise zu wenigstens einer Verstellantriebsachse (5, 5') der x-y-Verstelleinrichtungen mindestens annähernd parallel ist.

35. Mikroskop nach Anspruch 33 oder 34,
dadurch gekennzeichnet,
daß zumindest eine der Verstellantriebsachsen der Höhenverstelleinrichtungen (8) längs der x-Richtung (Doppelpfeil 15) verläuft.
